# EUROPÄISCHE PATENTSCHRIFT

(11) **EP 3 123 095 B1**
(45) Veröffentlichungstag und Bekanntmachung des Hinweises auf die Patenterteilung: **23.05.2018**
(21) Anmeldenummer: 15720267.2
(22) Anmeldetag: 24.03.2015
(51) Int. Cl.: F28F 25/08, F28D 21/00, F24F 5/00, C02F 1/00, F28D 9/00

(54) **EINBAUELEMENT ZUR VERWENDUNG IN DER KÜHLTECHNIK, IN DER WASSERAUFBEREITUNG ODER IM STOFFAUSTAUSCH UND VERFAHREN ZUR HERSTELLUNG EINES SOLCHEN EINBAUELEMENTES**
INSTALLATION ELEMENT FOR USE IN COOLING TECHNOLOGY, IN WATER TREATMENT, OR IN MASS TRANSFER AND METHOD FOR PRODUCING SUCH AN INSTALLATION ELEMENT
ÉLÉMENT INTÉGRÉ DESTINÉ À ÊTRE UTILISÉ DANS LA TECHNIQUE DE RÉFRIGÉRATION, DANS LE TRAITEMENT DES EAUX OU LORS DE L'ÉCHANGE DE MATIÈRE, ET PROCÉDÉ DE FABRICATION D'UN ÉLÉMENT INTÉGRÉ DE CE TYPE

(30) Priorität: 26.03.2014 DE 102014104162
(43) Veröffentlichungstag der Anmeldung: 01.02.2017
(73) Patentinhaber: ENEXIO Water Technologies GmbH, 48493 Wettringen (DE)
(72) Erfinder: NEUMANN, Ingo, 59073 Hamm (DE)
(74) Vertreter: Linnemann, Winfried
(86) Internationale Anmeldenummer: PCT/EP2015/056277
(87) Internationale Veröffentlichungsnummer: WO 2015/144716

(56) Entgegenhaltungen:
- EP-A2- 1 538 398
- WO-A1-2008/088159
- WO-A1-2013/091099
- DE-A1-102005 041 846
- DE-A1-102006 061 043
- DE-A1-102008 004 186
- US-A1- 2003 203 183
- US-A1- 2014 014 289

## Beschreibung

Die Erfindung betrifft ein Einbauelement zur Verwendung in der Kühltechnik, in der Wasseraufbereitung oder im Stoffaustausch, wobei das Einbauelement selbsttragend ist und aus mehreren Lagen gebildet ist, die zumindest zum Teil räumlich strukturiert sind und die miteinander verbunden sind, wobei benachbarte Lagen zwischen sich Strömungswege für ein flüssiges und/oder für ein gasförmiges Medium ausbilden.

Außerdem betrifft die Erfindung ein Verfahren zur Herstellung eines solchen Einbauelementes.

Aus der DE 103 57 307 A1 ist ein Kontaktkörper, insbesondere für einen Verdunstungsbefeuchter, bekannt, wobei der Kontaktkörper aus mehreren Lagen, die zumindest zum Teil räumlich strukturiert sind und die miteinander verbunden sind, gebildet ist, wobei benachbarte Lagen zwischen sich luftdurchlässige Strömungswege ausbilden, wobei der Kontaktkörper einerseits mit zu verdunstendem Wasser beschickbar und andererseits von einem Luftstrom unter Befeuchtung und Kühlung der Luft durchströmbar ist. In einer ersten Ausführung sind im Kontaktkörper zwei Arten von Lagen vorgesehen, wobei eine erste Art von Lagen aus einem selbsttragenden Material und eine zweite Art von Lagen aus einem saugfähigen, nichttragenden Material besteht. Das die zweite Art von Lagen bildende Material kann einseitig oder beidseitig auf jeweils eine Lage der ersten Art aufkaschiert sein. In einer zweiten Ausführung ist das die Lagen bildende Material ein geformtes Geotextil oder ein geformtes Vlies oder ein geformter poröser Kunststoff. Vorzugsweise ist in das Geotextil oder Vlies ein mechanisch und/oder thermisch formbares oder zunächst flüssiges und in einer formgebenden Form aushärtbares, tragendes Zusatzmaterial eingemischt oder eingelegt. Der Kunststoff ist hier bevorzugt ein durch vorherige Zugabe eines Schäumadditivs bei seiner Formgebung thermisch aufschäumbarer, offene Poren ausbildender Kunststoff. Erwähnt ist in dieser Schrift zum Stand der Technik auch, dass ein antibakteriell wirkendes Additiv in das Material/die Materialien der Lagen eingebettet und/oder auf dieses/diese aufgetragen sein kann.

Als nachteilig wird bei diesem Stand der Technik angesehen, dass der Kontaktkörper entweder in seiner Herstellung aufwendig ist, wenn verschiedenen Materialien aufeinander kaschiert werden, oder eine relativ geringe mechanische Stabilität aufweist, wenn als Material für die Lagen ein Geotextil oder Vlies oder Schaumkunststoff verwendet wird.

Das Dokument WO2013091099A ist ein Dokument des nächstkommenden Stand der Technik.

Für die vorliegende Erfindung stellt sich daher die Aufgabe, ein Einbauelement der eingangs genannten Art zu schaffen, das die angegebenen Nachteile des Standes der Technik vermeidet und das insbesondere kostengünstig herstellbar ist, dem mit geringen Aufwand anwendungsspezifische Eigenschaften verliehen werden können und das eine hohe mechanische Stabilität und lange Haltbarkeit im Einsatz aufweist. Die Lösung des das Einbauelement betreffenden Teils der Aufgabe gelingt erfindungsgemäß mit einem Einbauelement der eingangs genannten Art, das dadurch gekennzeichnet ist,
- dass zumindest ein Teil der Lagen aus einer mindestens dreischichtigen coextrudierten Kunststofffolie gebildet ist,
- dass eine mittlere Schicht der dreischichtigen Kunststofffolie eine mechanisch tragende Kunststoffschicht ist und
- dass die beiden äußeren Schichten der dreischichtigen Kunststofffolie entweder aus einem anwendungsspezifische Eigenschaften aufweisenden Kunststoff bestehen oder Kunststoffschichten mit jeweils wenigstens einem dem Kunststoff zugesetzten, den äußeren Schichten anwendungsspezifische Eigenschaften verleihenden Zusatzstoff sind.

Dadurch, dass erfindungsgemäß die Lagen aus einem Dreischichtsystem oder noch mehr Schichten bestehen, können den verschiedenen Schichten verschiedene Eigenschaften und Funktionen zugeordnet werden, für die sie jeweils optimiert sind. Durch die Coextrusion sind die Folien für die Lagen des Einbauelementes relativ einfach und schnell produzierbar, sodass große Stückzahlen von Einbaukörpern sehr wirtschaftlich erzeugt werden können. Insbesondere können die äußeren Schichten aus einem höherwertigen Kunststoffmaterial mit für den jeweiligen Anwendungsfall gewünschten oder notwendigen spezifischen Eigenschaften, insbesondere Oberflächeneigenschaften und/oder biologischen oder chemischen Eigenschaften, bestehen, während die mittlere Schicht aus einem gängigen, kostengünstigen Kunststoffmaterial besteht. Dies ist insofern vorteilhaft, als dass es in den oben genannten Anwendungen oft um Oberflächeneigenschaften der Lagen des Einbauelementes geht, so dass die mittlere Schicht vor allem mechanische Stabilität bringt, aber keine anderen speziellen Eigenschaften erfüllen muss. Die Kunststoffmaterialien mit den angesprochenen spezifischen Oberflächeneigenschaften oder biologischen oder chemischen Eigenschaften sind dagegen aber verhältnismäßig teuer, so dass der Einsatz dieser Kunststoffmaterialien in der gesamten Dicke der Lagen, wie dies in der Praxis bisher üblich ist, nur zu bedingt verkaufsfähigen Produkten führte. Dieser Nachteil wird mit der vorliegenden Erfindung vollkommen behoben und vermieden.

Alle Schichten der coextrudierten Folie können aus dem gleichen Grund-Kunststoff bestehen, wobei der Grund-Kunststoff in der mittleren Schicht bevorzugt in purer Form verwendet wird, während er in den äußeren Schichten z. B. mit die gewünschten spezifischen Eigenschaften bewirkenden Zusatzstoffen oder Zuschlägen versehen ist. Die Schichten der coextrudierten Folie können auch aus unterschiedlichen Grund-Kunststoffen bestehen, solange die Kunststoffe sich bei der Coextrusion zu der drei- oder mehrschichtigen Folie verarbeiten lassen.

Um dem erfindungsgemäßen Einbauelement für seine relevanten Einsatzfälle geeignete und optimale Eigenschaften zu verleihen, ist insbesondere vorgesehen, dass der Zusatzstoff ein antibakterieller oder ein einen mikrobiellen Bewuchs fördernder oder ein brandhemmender oder ein oberflächenspannungsvermindernder oder ein resistenzerhöhender Stoff ist. Je nach den Einsatzbedingungen des Einbauelementes kann eine Eigenschaft für sich durch einen einzigen Zusatzstoff erzeugt werden. Es ist aber auch möglich, mehrere verschiedene Zusatzstoffe einzusetzen, um mehrere gewünschte Eigenschaften gleichzeitig zu erzeugen. Die genaue Art und Dosierung des jeweiligen Zusatzstoffes wählt der Fachmann mit seinem Fachwissen aus, da ihm geeignete Zusatzstoffe zur Erzielung bestimmter gewünschter Kunststoffeigenschaften an sich bekannt sind. Bei Bedarf können für das Auswählen der am besten geeigneten Zusatzstoffe und deren optimale Dosierung auch relativ einfache Versuche durchgeführt werden. Z. B. sind Silberionen ein an sich bekannter antibakteriell wirkender Zusatzstoff.

Im Hinblick auf die an das erfindungsgemäße Einbauelement bei seiner Herstellung und in seinem Einsatz gestellten Anforderungen ist bevorzugt der Kunststoff für die coextrudierten Folien zur Bildung der Lagen Polypropylen (PP) oder Polyvinylchlorid (PVC) oder Polyethylen (PE) oder Polyvinylidenfluorid (PVDF).

Eine besonders wirtschaftliche Fertigung des Einbauelementes wird erreicht, wenn, wie bevorzugt vorgesehen, die mittlere Schicht der dreischichtigen coextrudierten Kunststofffolie eine Dicke aufweist, die wenigstens 50%, vorzugsweise wenigstens 70 %, der Dicke der gesamten Lage beträgt. Die Folie besteht so zur Hälfte oder mehr aus dem kostengünstigen, einfachen Grund-Kunststoff.

Um das Einbauelement bei möglichst geringem Gewicht möglichst stabil und haltbar zu gestalten, kann die mittlere Schicht der dreischichtigen coextrudierten Kunststofffolie einen mechanischen Verstärkungsstoff, vorzugsweise Talkum oder Glasfasern oder Kohlenstofffasern, enthalten. Mittels eines solchen Zusatzstoffes kann die mittlere Schicht bei gleicher mechanischer Stabilität mit einer geringeren Materialstärke ausgeführt werden, was vorteilhaft Material und Gewicht spart.

In einer konkreteren Ausführung ist das Einbauelement ein Kühlturm- oder Luftbefeuchter-Einbauelement und die äußeren Schichten der dreischichtigen coextrudierten Kunststofffolie weisen als anwendungsspezifische Eigenschaft eine antibakterielle und/oder eine oberflächenspannungsvermindernde Eigenschaft auf. Mit der antibakteriellen Eigenschaft wird erreicht, dass z.B. die Entwicklung und der Austrag von Legionellen oder anderen störenden oder gefährlichen Mikroorganismen verhindert werden. Die oberflächenspannungsvermindernde Eigenschaft sorgt für eine gute Benetzung der Lagen des Einbauelementes mit der dieses durchströmenden Flüssigkeit und stellt einen hohen Wirkungsgrad des Einbauelementes beim Wärmeaustausch oder bei der Luftbefeuchtung sicher.

In einer anderen konkreteren Ausführung ist das Einbauelement ein Kläranlagen- oder Fischzuchtanlagen-Einbauelement und die äußeren Schichten der dreischichtigen coextrudierten Kunststofffolie weisen als anwendungsspezifische Eigenschaft eine einen Bewuchs mit Schadstoffe abbauenden Mikroorganismen fördernde Eigenschaft auf. Die hier gewünschte Eigenschaft ist insbesondere eine Oberflächenstruktur der Lagen, die einen guten Halt für den Bewuchs bietet. Eine weitere hier günstige Eigenschaft kann eine zusätzliche Nährstoffversorgung für den Bewuchs sein.

In einer weiteren konkreteren Ausführung ist das Einbauelement ein Stoffaustauscher-Einbauelement und die äußeren Schichten der dreischichtigen coextrudierten Kunststofffolie weisen als anwendungsspezifische Eigenschaft eine die chemische Resistenz gegen die im Einbauelement in Stoffaustausch tretenden Medien erhöhende Eigenschaft auf. Beispielsweise können die in Stoffaustausch tretenden Medien chemisch ätzend sein. Durch entsprechende geeignete Auswahl des Grund-Kunststoffes und/oder der Zusatzstoffe werden dann die äußeren Schichten der Lagen gegen diese Einflüsse widerstandfähig gemacht, wobei auch hier der Fachmann aufgrund seines Fachwissens die geeigneten Grund-Kunststoffe und Zusatzstoffe auswählt.

Um dem Einbauelement bei einfacher und wirtschaftlicher Fertigung eine gute mechanische Stabilität zu verleihen, sind bevorzugt die einzelnen Lagen oder vorab gebildete Lagenpakete des Einbauelementes miteinander punktuell verbunden, insbesondere verschweißt oder verklebt oder mechanisch verklipst.

Die Lösung des das Verfahren zum Herstellen eines Einbauelementes betreffenden Teils der Aufgabe gelingt erfindungsgemäß mit einem Verfahren gemäß dem Oberbegriff des Anspruchs 10, welches dadurch gekennzeichnet ist,
- dass zumindest ein Teil der Lagen mittels Coextrusion in Form einer mindestens dreischichtigen Kunststofffolie erzeugt wird,
- dass eine mittlere Schicht der dreischichtigen Kunststofffolie als mechanisch tragende Kunststoffschicht erzeugt wird und
- dass die beiden äußeren Schichten der dreischichtigen Kunststofffolie entweder aus einem anwendungsspezifische Eigenschaften aufweisenden Kunststoff erzeugt werden oder in Form von Kunststoffschichten mit jeweils wenigstens einem dem Kunststoff zugesetzten, den äußeren Schichten anwendungsspezifische Eigenschaften verleihenden Zusatzstoff erzeugt werden.

Mit dem erfindungsgemäßen Verfahren lassen sich Einbauelemente der vorstehend beschriebenen Art mit gewünschten, einsatzspezifischen Eigenschaften wirtschaftlich herstellen.

Für das Verfahren gemäß Erfindung ist weiter vorgesehen, dass die dreischichtige Kunststofffolie nach dem Extrudieren als Folienbahn einem formgebenden Werkzeug stetig zugeführt wird, in welchem die Folienbahn stetig zu einer räumlichen Struktur geformt wird, dass nach einem die Formung fixierenden Abkühlen von der Folienbahn Abschnitte abgeschnitten werden und dass jeweils mehrere Abschnitte oder Abschnittspakete zu einem Einbauelement oder Einbauelementblock miteinander verbunden werden. In dieser Verfahrensausgestaltung ist eine kontinuierliche Produktion vorgesehen, womit große Stückzahlen an Einbauelementen günstig herstellbar sind.

Alternativ wird eine Verfahrensausgestaltung vorgeschlagen, die dadurch gekennzeichnet, dass die dreischichtige Kunststofffolie nach dem Extrudieren abgekühlt und in Abschnitte zerschnitten wird, dass die Abschnitte taktweise einem formgebenden Werkzeug zugeführt werden, in welchem die Folienbahn durch Thermoformung zu einer räumlichen Struktur geformt wird, und dass nach einem die Formung fixierenden Abkühlen jeweils mehrere Abschnitte oder Abschnittspakete zu einem Einbauelement oder Einbauelementblock miteinander verbunden werden. Hier erfolgt eine taktweise Fertigung, bei der die Möglichkeit besteht, Zwischenprodukte, hier ungeformte und geformte Folienabschnitte, zwischenzulagern und erst bei Bedarf oder nach einem Transport an einen anderen Ort weiter zu bearbeiten und zu verarbeiten.

Schließlich ist in Weiterbildung der beiden zuletzt beschriebenen Verfahrensausgestaltungen erfindungsgemäß vorgesehen, dass die Einbauelementblöcke mit einer Größe hergestellt werden, die größer ist als die Größe der Einbauelemente und dass aus den Einbauelementblöcken anschließend Einbauelemente gewünschter Abmessungen ab- oder ausgeschnitten werden. Vorzugsweise haben die Einbauelementblöcke dabei eine Größe, die einem ganzzahligen Vielfachen der Größe eines Einbauelementes entspricht, um Verschnitt und Abfall zu vermeiden.

Im Folgenden wird ein Ausführungsbeispiel der Erfindung anhand einer Zeichnung erläutert. Die Figuren der Zeichnung zeigen:
- Figur 1: einen Ausschnitt aus einem aus mehreren Lagen bestehenden Einbauelement, in Ansicht auf eine der Lagenstirnseiten,
- Figur 2: einen vergrößerten Ausschnitt aus einer dreischichtigen Lage des Einbauelementes aus Figur 1, und
- Figur 3: eine schematisch dargestellte Extruderanordnung zur Coextrusion von dreischichtigen Kunststofffolien für die Lagen des Einbauelementes.

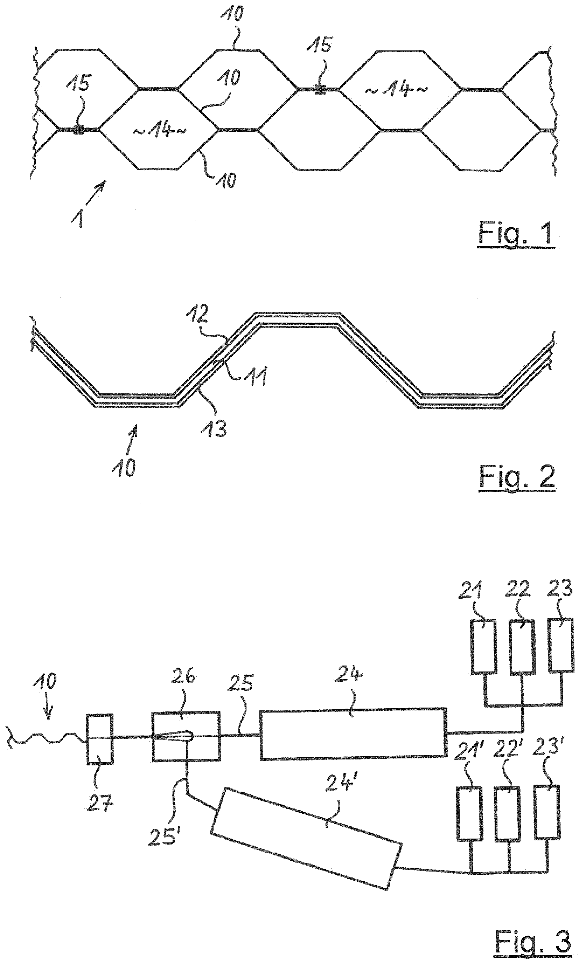

Figur 1 der Zeichnung zeigt einen Ausschnitt aus einem aus mehreren Lagen 10 bestehenden Einbauelement 1, in Ansicht auf eine der Lagenstirnseiten, wobei hier lediglich drei Lagen 10 gezeigt sind; der Praxis ist bei einem üblichen Einbauelement 1 die Anzahl der Lagen 10 wesentlich größer.

Die einzelnen Lagen 10 bestehen jeweils aus einer eine wellige Form aufweisenden Kunststofffolie, wobei hier die Wellen so gegeneinander versetzt sind, dass sich abwechselnd Bereiche, in denen zwei Lagen 10 aneinander anliegen, und Bereiche, in denen die zwei Lagen 10 Strömungswege 14 für ein oder mehrere das Einbauelement 1 in seinem Einsatz durchströmende Medien zwischen sich ausbilden, ergeben.

In den aneinander anliegenden Bereichen zweier Lagen 10 sind diese mittels Verbindungspunkten 15 in ausreichender Anzahl und geeigneter Verteilung und Dichte miteinander verbunden, beispielsweise verschweißt oder verklebt oder mechanisch verklipst. Die miteinander verbundenen Lagen 10 bilden dann ein Einbauelement 1, das beispielsweise Quaderform hat und so stabil ist, dass es einen selbsttragenden Körper bildet.

Die Wellen in den Lagen 10 können senkrecht zu der dem Betrachter zugewandten Stirnkante der Lagen 10 oder auch unter einem schrägen Winkel dazu ausgerichtet sein. Die Wellen benachbarter Lagen 10 können dabei parallel oder auch einander überkreuzend verlaufen.

Figur 2 zeigt einen Ausschnitt aus einer Lage 10 des Einbauelementes 1 aus Figur 1 in vergrößerter Darstellung. Die Lage 10 besteht hier aus einer Kunststofffolie aus drei Schichten 11, 12 und 13, die durch Coextrusion erzeugt ist.

Eine mittlere Schicht 11 besteht aus einem gängigen Kunststoff, der keine speziellen Eigenschaften aufweisen muss, und bildet im Wesentlichen den tragenden Teil der Lage 10. Besonders geeignet sind hier Kunststoffe wie Polypropylen (PP) oder Polyvinylchlorid (PVC) oder Polyethylen (PE) oder Polyvinylidenfluorid (PVDF).

Beiderseits der mittleren Schicht 11 ist je eine äußere Schicht 12, 13 angeordnet, die jeweils ebenfalls aus Kunststoff besteht, welcher hier, anders als in der mittleren Schicht 11, jedoch entweder von sich aus besondere, anwendungsspezifische Eigenschaften aufweist oder dem durch einen oder mehrere Zusatzstoffe anwendungsspezifische Eigenschaften verliehen sind.

Je nach Einsatz des Einbauelementes 1 sind unterschiedliche anwendungsspezifische Eigenschaften gewünscht oder notwendig.

Bei einem Einsatz des Einbauelementes 1 in einem Kühlturm ist beispielsweise eine antibakterielle Eigenschaft der äußeren Schichten 12, 13 erwünscht, um eine Vermehrung und Austragung von gefährlichen Mikroorganismen, wie Legionellen, zu vermeiden. Ein hier geeigneter Zusatzstoff mit antibakterieller Wirkung sind beispielsweise Silberionen. Für den gleichen Anwendungsfall ist häufig auch eine die Oberflächenspannung der über die Lagen 10 fließenden Flüssigkeiten vermindernde Eigenschaft der äußeren Schichten 12, 13 der Lagen 10 erwünscht, die durch einen oder mehrere die entsprechende Eigenschaft hervorrufende Zusatzstoffe erreicht werden kann.

Bei einem Einsatz des Einbauelementes 1 als Kläranlagen- oder Fischzuchtanlagen-Einbauelement ist es erwünscht, dass die äußeren Schichten 12, 13 der dreischichtigen coextrudierten Kunststofffolie als anwendungsspezifische Eigenschaft eine einen Bewuchs mit Schadstoffe abbauenden Mikroorganismen fördernde Eigenschaft aufweisen. Die Eigenschaft kann hierzu z.B. eine bestimmte Oberflächenrauigkeit für einen guten Halt der anzusiedelnden Mikroorganismen und/oder eine zumindest für eine Startphase der Mikroorganismenbesiedelung hilfreiche, zeitlich begrenzte Nährstoffversorgung sein.

Wenn das Einbauelement 1 ein Stoffaustauscher-Einbauelement ist, dann weisen zweckmäßig die äußeren Schichten 12, 13 der dreischichtigen coextrudierten Kunststofffolie als anwendungsspezifische Eigenschaft eine die chemische Resistenz gegen die im Einbauelement in Stoffaustausch tretenden Medien erhöhende Eigenschaft auf. Da die mittlere Schicht der dreischichtigen coextrudierten Kunststofffolie durch die beiden äußeren Schichten abgedeckt ist und daher nicht mit den ggf. aggressiven Medien in Kontakt tritt, braucht die mittlere Schicht keine erhöhte Resistenz aufzuweisen.

Figur 3 schließlich zeigt eine schematisch dargestellte Extruderanordnung zur Coextrusion von dreischichtigen Kunststofffolien für die Lagen 10 des Einbauelementes 1.

Rechts in Figur 3 sind zwei Gruppen von je drei Vorratsbehältern 21, 22 und 23 beziehungsweise 21', 22' und 23' dargestellt, in welchen Kunststoffgranulate sowie Zusatzstoffe für die Coextrusion der Folien vorgehalten werden. Über nicht dargestellte Förder- und Dosiereinrichtungen sind die Vorratsbehälter 21, 22 und 23 mit einem ersten Schneckenförderer 24 verbunden, in welchem eine plastifizierte Kunststoffmasse erzeugt wird. Ebenfalls über nicht dargestellte Förder- und Dosiereinrichtungen sind die Vorratsbehälter 21', 22' und 23' mit einem zweiten Schneckenförderer 24' verbunden, in welchem ebenfalls eine plastifizierte Kunststoffmasse, gegebenenfalls unter Zusatz von bestimmte, gewünschte Eigenschaften hervorrufenden Zusatzstoffen, erzeugt wird.

Die plastifizierten Kunststoffmassen werden mittels der Schneckenförderer 24 und 24' durch je einen Zuführkanal 25 beziehungsweise 25' einer gemeinsamen Extrusionsdüse 26 zugeführt, in der die die Lagen 10 bildende Folie mit ihren drei Schichten 11, 12 und 13 durch Coextrusion erzeugt wird. Dazu wird in der Düse 26 die plastifizierte Kunststoffmasse aus dem zweiten Schneckenförderer 24' in Form je eines flachen Strangs zur Oberseite und Unterseite der ebenfalls in Form eines flachen Strangs ausgetragenen plastifizierten Kunststoffmasse aus dem ersten Schneckenförderer 24 geführt, um so durch deren Coextrusion die dreischichtige, in sich zusammenhängende Folie zu erzeugen.

Nach dem Verlassen der Düse 26 wird die dreischichtige Folie durch ein formgebendes Werkzeug 27 geführt, um der Folie die gewünschte räumliche Struktur, hier eine Wellung, zu geben.

Nach einem Abkühlen der Folienbahn und Zuschneiden in Folienbahnabschnitte können die so erzeugten Lagen 10 übereinandre angeordnet und miteinander zu dem Einbauelement 1 nach Figur 1 verbunden werden.

**Bezugszeichenliste:**

| Zeichen | Bezeichnung |
|---|---|
| 1 | Einbauelement |
| 10 | Lagen von 1 |
| 11 | mittlere Schicht von 10 |
| 12, 13 | äußere Schichten von 10 |
| 14 | Strömungswege in 1 |
| 15 | Verbindungspunkte in 1 |
| | |
| 2 | Extruderanordnung |
| 21, 22, 23 | erste Vorratsbehälter |
| 21', 22', 23' | zweite Vorratsbehälter |
| 24, 24' | Schneckenförderer |
| 25, 25' | Zuführkanäle |
| 26 | Extrusionsdüse |
| 27 | formgebendes Werkzeug |

## Patentansprüche

1. Einbauelement (1) zur Verwendung in der Kühltechnik, in der Wasseraufbereitung oder im Stoffaustausch, wobei das Einbauelement (1) selbsttragend ist und aus mehreren Lagen (10) gebildet ist, die zumindest zum Teil räumlich strukturiert sind und die miteinander verbunden sind, wobei benachbarte Lagen (10) zwischen sich Strömungswege (14) für ein flüssiges und/oder für ein gasförmiges Medium ausbilden,
**dadurch gekennzeichnet,**
**dass** zumindest ein Teil der Lagen (10) aus einer mindestens dreischichtigen coextrudierten Kunststofffolie gebildet ist,
**dass** eine mittlere Schicht (11) der dreischichtigen Kunststofffolie eine mechanisch tragende Kunststoffschicht ist und
**dass** die beiden äußeren Schichten (12, 13) der dreischichtigen Kunststofffolie entweder aus einem anwendungsspezifische Eigenschaften aufweisenden Kunststoff bestehen oder Kunststoffschichten mit jeweils wenigstens einem dem Kunststoff zugesetzten, den äußeren Schichten anwendungsspezifische Eigenschaften verleihenden Zusatzstoff sind.

2. Einbauelement nach Anspruch 1, **dadurch gekennzeichnet, dass** der Zusatzstoff ein antibakterieller oder ein einen mikrobiellen Bewuchs fördernder oder ein brandhemmender oder ein oberflächenspannungsvermindernder oder ein resistenzerhöhender Stoff ist.

3. Einbauelement nach Anspruch 1 oder 2, **dadurch gekennzeichnet, dass** der Kunststoff Polypropylen (PP) oder Polyvinylchlorid (PVC) oder Polyethylen (PE) oder Polyvinylidenfluorid (PVDF) ist.

4. Einbauelement nach einen der Ansprüche 1 bis 3, **dadurch gekennzeichnet, dass** die mittlere Schicht (11) der dreischichtigen coextrudierten Kunststofffolie eine Dicke aufweist, die wenigstens 50%, vorzugsweise wenigstens 70 %, der Dicke der gesamten Lage (10) beträgt.

5. Einbauelement nach einen der Ansprüche 1 bis 4, **dadurch gekennzeichnet, dass** die mittlere Schicht (11) der dreischichtigen coextrudierten Kunststofffolie einen mechanischen Verstärkungsstoff, vorzugsweise Talkum oder Glasfasern oder Kohlenstofffasern, enthält.

6. Einbauelement nach einem der Ansprüche 1 bis 5, **dadurch gekennzeichnet, dass** es ein Kühlturm- oder Luftbefeuchter-Einbauelement ist und dass die äußeren Schichten (12, 13) der dreischichtigen coextrudierten Kunststofffolie als anwendungsspezifische Eigenschaft eine antibakterielle und/oder eine oberflächenspannungsvermindernde Eigenschaft aufweisen.

7. Einbauelement nach einen der Ansprüche 1 bis 5, **dadurch gekennzeichnet, dass** es ein Kläranlagen- oder Fischzuchtanlagen-Einbauelement ist und dass die äußeren Schichten (12, 13) der dreischichtigen coextrudierten Kunststofffolie als anwendungsspezifische Eigenschaft eine einen Bewuchs mit Schadstoffe abbauenden Mikroorganismen fördernde Eigenschaft aufweisen.

8. Einbauelement nach einen der Ansprüche 1 bis 5, **dadurch gekennzeichnet, dass** es ein Stoffaustauscher-Einbauelement ist und dass die äußeren Schichten (12, 13) der dreischichtigen coextrudierten Kunststofffolie als anwendungsspezifische Eigenschaft eine die chemische Resistenz gegen die im Einbauelement in Stoffaustausch tretenden Medien erhöhende Eigenschaft aufweisen.

9. Einbauelement nach einen der vorherigen Ansprüche, **dadurch gekennzeichnet, dass** die einzelnen Lagen (10) oder vorab gebildete Lagenpakete des Einbauelementes (1) miteinander punktuell verbunden, insbesondere verschweißt oder verklebt oder mechanisch verklipst, sind.

10. Verfahren zum Herstellen eines Einbauelementes (1) zur Verwendung in der Kühltechnik, in der Wasseraufbereitung oder im Stoffaustausch, insbesondere eines Einbauelementes (1) nach einem der Ansprüche 1 bis 9, wobei das Einbauelement (1) selbsttragend ist und aus mehreren Lagen (10) gebildet wird, die zumindest zum Teil räumlich strukturiert sind und die miteinander verbunden werden, wobei benachbarte Lagen (10) zwischen sich Strömungswege (14) für ein flüssiges und/oder für ein gasförmiges Medium ausbilden,
**dadurch gekennzeichnet,**
**dass** zumindest ein Teil der Lagen (10) mittels Coextrusion in Form einer mindestens dreischichtigen Kunststofffolie erzeugt wird,
**dass** eine mittlere Schicht (11) der dreischichtigen Kunststofffolie als mechanisch tragende Kunststoffschicht erzeugt wird und
**dass** die beiden äußeren Schichten (12, 13) der dreischichtigen Kunststofffolie entweder aus einem anwendungsspezifische Eigenschaften aufweisenden Kunststoff erzeugt werden oder in Form von Kunststoffschichten mit jeweils wenigstens einem dem Kunststoff zugesetzten, den äußeren Schichten (12, 13) anwendungsspezifische Eigenschaften verleihenden Zusatzstoff erzeugt werden.

11. Verfahren nach Anspruch 10, **dadurch gekennzeichnet, dass** die dreischichtige Kunststofffolie nach dem Extrudieren als Folienbahn einem formgebenden Werkzeug (27) stetig zugeführt wird, in welchem die Folienbahn stetig zu einer räumlichen Struktur geformt wird, dass nach einem die Formung fixierenden Abkühlen von der Folienbahn Abschnitte abgeschnitten werden und dass jeweils mehrere Abschnitte oder Abschnittspakete zu einem Einbauelement (1) oder Einbauelementblock miteinander verbunden werden.

12. Verfahren nach Anspruch 10, **dadurch gekennzeichnet, dass** die dreischichtige Kunststofffolie nach dem Extrudieren abgekühlt und in Abschnitte zerschnitten wird, dass die Abschnitte taktweise einem formgebenden Werkzeug (27) zugeführt werden, in welchem die Folienbahn durch Thermoformung zu einer räumlichen Struktur geformt wird, und dass nach einem die Formung fixierenden Abkühlen jeweils mehrere Abschnitte oder Abschnittspakete zu einem Einbauelement (1) oder Einbauelementblock miteinander verbunden werden.

13. Verfahren nach Anspruch 11 oder 12, **dadurch gekennzeichnet, dass** die Einbauelementblöcke mit einer Größe hergestellt werden, die größer ist als die Größe der Einbauelemente (1) und dass aus den Einbauelementblöcken anschließend Einbauelemente (1) gewünschter Abmessungen ab- oder ausgeschnitten werden.

## Claims

1. An installation element (1) for use in cooling and heating technology, in water treatment or in mass transfer, wherein the installation element (1) is self-supporting and consists of several layers (10) that are at least partially three-dimensionally structured and that are connected to one another, wherein between adjacent layers (10) flow paths (14) are formed for a liquid and/or for a gaseous medium,
**characterised in that**
at least a portion of the layers (10) is made from an at least triple-ply co-extruded plastic film,
a middle layer (11) of the triple-ply plastic film is a mechanically load-bearing plastic layer, and
the two outer layers (12, 13) of the triple-ply plastic film either consist of a plastic with properties specific to the application or they are plastic layers having at least one additive added to them which imparts properties to the respective outer layers that are specific to the application.

2. The installation element according to Claim 1, **characterised in that** the additive is an anti-bacterial or a microbial growth-promoting or flame-retardant or surface-tension reducing or resistance-enhancing substance.

3. The installation element according to Claim 1 or Claim 2, **characterised in that** the plastic is polypropylene (PP) or polyvinyl chloride (PVC) or polyethylene (PE) or polyvinylidene fluoride (PVDF).

4. The installation element according to one of Claims 1 to 3, **characterised in that** the middle layer (11) of the triple-ply co-extruded plastic film has a thickness amounting to at least 50%, preferably at least 70%, of the thickness of the entire layer (10).

5. The installation element according to one of Claims 1 to 4, **characterised in that** the middle layer (11) of the triple-ply co-extruded plastic film has a mechanical reinforcement material, preferably containing talcum or glass fibres or carbon fibres.

6. The installation element according to one of Claims 1 to 5, **characterised in that** it is an installation element for a cooling tower or an air humidifier, and that the outer layers (12, 13) of the triple-ply co-extruded plastic film have an anti-bacterial and/or a surface-tension reducing property as the property specific to the application.

7. The installation element according to one of Claims 1 to 5, **characterised in that** it is an installation element for a sewage treatment plant or a fish farm, and that the outer layers (12, 13) of the triple-ply co-extruded plastic film have a property that promotes the growth of micro-organisms which break down harmful substances, as the property specific to the application.

8. The installation element according to one of Claims 1 to 5, **characterised in that** it is an installation element for the exchange of substances and that the outer layers (12, 13) of the triple-ply co-extruded plastic film have as a property specific to the application a property that enhances the chemical resistance to media entering into mass transfer in the installation element.

9. The installation element according to one of the preceding claims, **characterized in that** the individual layers (10) or layer packets of the installation element (1) that were formed in advance are connected together point by point, particularly welded or glued or mechanically clipped together.

10. A method for producing an installation element (1) for use in cooling and heating technology, in water treatment or in mass transfer, particularly the production of an installation element (1) according to one of Claims 1 to 9, wherein the installation element (1) is self-supporting and consists of several layers (10) that are at least partially three-dimensionally structured and connected to one another, wherein between adjacent layers (10) flow paths (14) are formed for a liquid and/or for a gaseous medium,
**characterised in that**
at least a portion of the layers (10) is made by co-extrusion in the form of a plastic film with at least three layers,
a middle layer (11) of the triple-ply plastic film is produced as a mechanically load-bearing plastic layer, and
the two outer layers (12, 13) of the triple-ply plastic film either are made of a plastic with properties specific to the application or they are produced in the form of plastic layers having added to the plastic at least one additive which imparts properties to the respective outer layers (12, 13) that are specific to the application.

11. The method according to Claim 10, **characterised in that** after the extrusion the triple-ply plastic film is continuously fed in the form of a film web to a moulding tool (27) in which the film web is continuously moulded to a three-dimensional structure, that after the cooling of the film web, which fixes the shape, segments of the film web are cut off, and that several segments or segment packets at a time are connected together to form an installation element (1) or a block of installation elements.

12. The method according to Claim 10, **characterised in that** after the extrusion the triple-ply plastic film is cooled and cut into segments, that the segments are fed in a clocked manner to a moulding tool (27) in which the film web is moulded to form a three-dimensional structure by thermo-moulding, and that after the cooling, which fixes the shape, several segments or segment packets at a time are connected together to form an installation element (1) or a block of installation elements.

13. The method according to Claim 11 or 12, **characterised in that** the installation element blocks are produced in a size that is larger than that of the installation elements (1) and that installation elements (1) of the desired size are subsequently cut off or cut out of the installation element blocks.

## Revendications

1. Élément intégré (1) destiné à être utilisé dans la technique de réfrigération, dans le traitement des eaux ou lors de l'échange de matière, l'élément intégré (1) étant autoporteur et constitué de plusieurs couches (10) qui sont au moins partiellement structurées dans l'espace et reliées les unes aux autres, des couches (10) voisines formant entre elles des voies d'écoulement (14) pour un milieu liquide et/ou un milieu gazeux,
**caractérisé en ce**
**qu'**au moins une partie des couches (10) est constituée d'un film en matière plastique coextrudé à au moins trois couches,
**qu'**une couche du milieu (11) du film en matière plastique à trois couches est une couche de matière plastique mécaniquement porteuse et
**que** les deux couches extérieures (12, 13) du film en matière plastique à trois couches sont constituées soit d'une matière plastique présentant des propriétés spécifiques à l'application soit sont des couches de matière plastique dotées chacune au moins d'un additif ajouté à la matière plastique et donnant aux couches extérieures des propriétés spécifiques à l'application.

2. Élément intégré selon la revendication 1, **caractérisé en ce que** l'additif est une substance antibactérienne ou favorisant la colonisation microbienne ou ignifuge ou réduisant la tension superficielle ou augmentant la résistance.

3. Élément intégré selon la revendication 1 ou 2, **caractérisé en ce que** la matière plastique est du polypropylène (PP) ou du polychlorure de vinyle (PVC) ou du polyéthylène (PE) ou du fluorure de polyvinylidène (PVDF).

4. Élément intégré selon l'une quelconque des revendications 1 à 3, **caractérisé en ce que** la couche du milieu (11) du film en matière plastique coextrudé à trois couches présente une épaisseur d'au moins 50 %, de préférence au moins 70 % de l'épaisseur de la couche entière (10).

5. Élément intégré selon l'une quelconque des revendications 1 à 4, **caractérisé en ce que** la couche du milieu (11) du film en matière plastique coextrudé à trois couches contient un matériau de renforcement mécanique, de préférence du talc ou des fibres de verre ou des fibres de carbone.

6. Élément intégré selon l'une quelconque des revendications 1 à 5, **caractérisé en ce qu'**il s'agit d'un élément intégré pour tour aéroréfrigérante ou humidificateur d'air et que les couches extérieures (12, 13) du film en matière plastique coextrudé à trois couches présentent comme propriété spécifique à l'application une propriété antibactérienne et/ou réduisant la tension superficielle.

7. Élément intégré selon l'une quelconque des revendications 1 à 5, **caractérisé en ce qu'**il s'agit d'un élément intégré pour station d'épuration des eaux ou pour exploitation piscicole et que les couches extérieures (12, 13) du film en matière plastique coextrudé à trois couches présentent comme propriété spécifique à l'application une propriété favorisant la colonisation de micro-organismes décomposant des substances toxiques.

8. Élément intégré selon l'une quelconque des revendications 1 à 5, **caractérisé en ce qu'**il s'agit d'un élément intégré pour échangeur de matière et que les couches extérieures (12, 13) du film en matière plastique coextrudé à trois couches présentent comme propriété spécifique à l'application une propriété augmentant la résistance chimique contre les milieux entrant en échange de matière dans l'élément intégré.

9. Élément intégré selon l'une quelconque des revendications précédentes, **caractérisé en ce que** les différentes couches (10) ou paquets de couches de l'élément intégré (1), qui sont formés au préalable, sont reliés ponctuellement les uns aux autres, notamment soudés ou collés ou fixés mécaniquement par encliquetage.

10. Procédé de production d'un élément intégré (1) destiné à être utilisé dans la technique de réfrigération, dans le traitement des eaux ou lors de l'échange de matière, notamment d'un élément intégré (1) selon l'une quelconque des revendications 1 à 9, ledit élément intégré (1) étant autoporteur et constitué de plusieurs couches (10) qui sont au moins partiellement structurées dans l'espace et reliées les unes aux autres, des couches (10) voisines formant entre elles des voies d'écoulement (14) pour un milieu liquide et/ou un milieu gazeux,
**caractérisé en ce**
**qu'**au moins une partie des couches (10) est produite par coextrusion sous la forme d'un film en matière plastique à au moins trois couches,
**qu'**une couche du milieu (11) du film en matière plastique à trois couches est produite en tant que couche de matière plastique mécaniquement porteuse et
**que** les deux couches extérieures (12, 13) du film en matière plastique à trois couches sont produites soit à partir d'une matière plastique présentant des propriétés spécifiques à l'application soit sont produites sous la forme de couches de matière plastique dotées chacune au moins d'un additif ajouté à la matière plastique et donnant aux couches extérieures (12, 13) des propriétés spécifiques à l'application.

11. Procédé selon la revendication 10, **caractérisé en ce que** le film en matière plastique à trois couches est, après l'extrusion, introduit en continu sous forme de bande de film dans un outil de formage (27) dans lequel est donnée en continu à ladite bande de film la forme d'une structure spatialisée, que, après un refroidissement fixant le formage, des segments sont coupés à longueur dans la bande de film, et que plusieurs segments ou paquets de segments sont respectivement reliés les uns aux autres en un élément intégré (1) ou bloc d'élément intégré.

12. Procédé selon la revendication 10, **caractérisé en ce que** le film en matière plastique à trois couches est refroidi après l'extrusion et découpé en segments, que lesdits segments sont introduits de manière cadencée dans un outil de formage (27) dans lequel est donnée à ladite bande de film, par thermoformage, la forme d'une structure spatialisée, que, après un refroidissement fixant le formage, plusieurs segments ou paquets de segments sont respectivement reliés les uns aux autres en un élément intégré (1) ou bloc d'élément intégré.

13. Procédé selon la revendication 11 ou 12, **caractérisé en ce que** les blocs d'élément intégré sont produits dans une taille qui est supérieure à la taille des éléments intégrés (1) et que des éléments intégrés (1) de dimensions souhaitées sont ensuite découpés ou coupés à longueur dans les blocs d'élément intégré.
